# EUROPEAN PATENT SPECIFICATION

(11) **EP 4 219 957 B1**
(45) Date of publication and mention of the grant of the patent: **18.06.2025**
(21) Application number: 21870667.9
(22) Date of filing: 07.01.2021
(51) Int. Cl.: F15B 13/043

(54) **INTELLIGENT CONTROL SYSTEM OF HYDRAULIC HITCH DEVICE**
INTELLIGENTES STEUERUNGSSYSTEM EINER HYDRAULISCHEN KUPPLUNGSVORRICHTUNG
SYSTÈME DE COMMANDE INTELLIGENT DE DISPOSITIF D'ATTELAGE HYDRAULIQUE

(30) Priority: 22.09.2020 CN 202011003075
(43) Date of publication of application: 02.08.2023
(73) Proprietor: Boding Jinggong Intelligent Technology (Shandong) Co., Ltd., Weifang City, Shandong Province (CN)
(72) Inventor: WANG, Lifeng, Weifang, Shandong 261061 (CN); WU, Beibei, Weifang, Shandong 261061 (CN); LI, Wuhai, Weifang, Shandong 261061 (CN)
(74) Representative: Murgitroyd & Company
(86) International application number: PCT/CN2021/070622
(87) International publication number: WO 2022/062277

(56) References cited:
- CN-A- 103 047 210
- CN-A- 106 050 768
- CN-A- 111 963 508
- CN-U- 212 744 561
- CN-Y- 201 081 889
- US-B2- 7 938 217
- US-B2- 8 261 865

## Description

### Statement

The present disclosure claims the priority of the following patent application:
title: Intelligent Control System of Hydraulic Hitch Device, and Filing Date: September 22, 2020; application No.: CN202011003075.7.

### Technical Field

The present invention relates to a hydraulic hitch device for agricultural equipment, in particular to an intelligent control system of a hydraulic hitch device.

### Background

A hydraulic hitch device for agricultural equipment (such as a tractor) is used for hitching a mounted or semi-mounted farm tool, lifting a farm tool and adjusting a tilling depth, and achieving loading and hydraulic power output, and the like. The hydraulic hitch device consists of a hydraulic system and a hitch mechanism, wherein the hydraulic system includes an oil pump, a distributor, a lifting oil cylinder, a cylinder control mechanism, and the like, and the hitch mechanism includes an upper pull rod, a lower pull rod, a lift arm, and the like. On one hand, raising, lowering, neutralizing, floating of the form tool can be achieved by manipulating the distributor, so that the tractor has the functions of position control, force control, and force-position integrated control, and on the other hand, active jolt reduction of the form tool can be achieved by the hydraulic hitch device during transition operation.

For the function in the first aspect, Chinese utility model patent CN202385466U discloses an electrically controlled distributor which employs an electromagnet or a motor driven lead screw nut mechanism as a linear actuator, and intelligent control of a hydraulic lifter is achieved by manipulating a valve rod of the distributor to move to set positions such as a raising position, a lowering position, a neutral position, and a floating position through a sensor and an electric control unit. However, large energy is required to drive the movement of a valve rod of a large and medium-sized hydraulic distributor, and the linear actuator in the above patent technology needs to consume large electrical power, while the cost and service life are also limited to some extent.

To this end, Chinese invention patent CN103047210A discloses an electro-hydraulic control device of a hydraulic distributor, wherein the movement of the distributor is controlled through the electro-hydraulic control device, and power of a host hydraulic system is used as an energy source of valve rod movement control, saving the consumption of electric power, but the device still has the following technical defects:

1) frequent use of the pressure of a main oil path will cause energy waste of the system when the agricultural equipment is in tillage; and

2) four solenoid valves are used to control the motion of a valve element, and the structure is complex.

In order to reduce the consumption of system energy, and solve the problem of excessive use of the pressure of the main oil path when the farm tool is in operation, Chinese utility model patent application CN202020989612.9 discloses an intelligent control system of a hydraulic hitch device, including a lifting oil cylinder and a hydraulic distributor, wherein the hydraulic distributor includes four working positions which respectively correspond to a raising working mode, a lowering working mode, a neutral working mode, and a floating working mode of a farm tool, a first working oil port of the hydraulic distributor communicates with a rodless cavity of the lifting oil cylinder through a first working oil path, a second working oil port of the hydraulic distributor communicates with a rod cavity of the lifting oil cylinder through a second working oil path, a pressure oil port of the hydraulic distributor communicates with a main oil path, and the main oil path is provided with a switch valve; a force sensor configured to detect information on a pulling force borne by a lower pull rod or an upper pull rod; a lifter position sensor configured to detect position information of a lifter; a valve rod displacement sensor configured to detect displacement information of a valve rod of the hydraulic distributor; wherein the force sensor, the lifter position sensor and the valve rod displacement sensor are electrically connected to an electric control unit, respectively; and an accumulating oil path, including an accumulator, wherein the accumulator communicates with the main oil path through a second one-way valve; the accumulator communicates with the first working oil path and the second working oil path, respectively through a pressure reversing valve; one end of the valve rod of the hydraulic distributor is connected with a hydraulic push rod, and the other end of the valve rod is provided with a return spring; and the hydraulic push rod communicates with the accumulating oil path through an oil charge solenoid valve, the hydraulic push rod achieves oil return and pressure relief through an oil drain solenoid valve, and the oil charge solenoid valve and the oil drain solenoid valve are electrically connected to the electric control unit, respectively.

When the farm tool is in the raising working mode or the neutral working mode, hydraulic oil of the first working oil path is in a high pressure state, oil is retured and pressure is relieved in the second working oil path, and the high pressure oil of the first working oil path charges the accumulator under the action of high pressure oil; when the farm tool is in the lowering working mode, hydraulic oil of the second working oil path is in a high pressure state, oil is returned and pressure is relieved in the first working oil path, and high pressure oil of the second working oil path charges the accumulator; and only when the farm tool is in the floating working mode, the accumulator cannot be charged because hydraulic oil of both the first working oil path and the second working oil path is unloaded at this time, the switch valve is closed, and the main oil path charges the accumulator. As a result, the use of the pressure of the main oil path is less when the farm tool is in operation, reducing the consumption of system energy.

Also, high pressure oil within the accumulator pushes the hydraulic push rod, and the valve rod of the hydraulic distributor moves to the left only when the oil charge solenoid valve is energized open, and hydraulic oil of the hydraulic push rod is subjected to pressure relief, and the valve rod of the hydraulic distributor moves to the right under the action of the return spring only when the oil drain solenoid valve is energized open. The electric control unit achieves the raising, lowering, neutralizing, and floating functions of the farm tool by detecting force information of the lower pull rod or the upper pull rod by the force sensor, detecting position information of the lifter by the lifter position sensor, controlling opening and closing of the oil charge solenoid valve and the oil drain solenoid valve, controlling the movement of the valve rod of the hydraulic distributor, and feeding back position information of the valve rod by the valve rod displacement sensor. Compared with the solution in which the valve rod is controlled by four solenoid valves, only two solenoid valves and one return spring are required to control the movement of the valve rod of the hydraulic distributor, and the structure is simpler and reliable.

However, it is found during use that the hydraulic system cannot adjust a raising speed and a lowering speed of the farm tool, restricting the performance of an electric control system for a tractor.

The hydraulic hitch device, on the other hand, has the function of active jolt reduction on the form tool.

A basic principle for active jolt reduction is that up-and-down motion of the lifting oil cylinder is used to compensate for up-and-down jolt of a hitched farm tool, when a tractor starts to jolt due to the road surface, an electric control unit collects information from the force sensor and the position sensor, the jolt magnitude and direction of the farm tool are determined, and the rodless cavity and the rod cavity of the lifting oil cylinder are charged with oil or oil in the rodless cavity and the rod cavity of the lifting oil cylinder is drained through an electrically controlled hydraulic valve, resulting in a displacement of the lifting oil cylinder opposite to the direction of jolt, thereby reducing jolt of the hitched farm tool. This places high demands on the responsiveness of the electric control unit and the electronically controlled hydraulic valve, and in applications, the lifting oil cylinder has a problem of action lag, severely affecting the jolt reduction effect.

In order to reduce the responsiveness requirements on the electric control unit and the electrically controlled hydraulic valve, and improve active jolt reduction on the hitched farm tool, Chinese invention patent CN111520367A discloses an electronically controlled hydraulic system of a hydraulic hitch device, a tractor and an active jolt reduction control method, wherein a first overflow pressure maintaining branch oil path for performing overflow pressure maintaining on a rodless cavity of the lifting oil cylinder and a second overflow pressure maintaining branch oil path for performing overflow pressure maintaining on a rod cavity of the lifting oil cylinder are arranged between the first working oil path and the second working oil path, and the first overflow pressure maintaining branch oil path and the second overflow pressure maintaining branch oil path each are provided with an electronically controlled switch valve.

When towing agricultural equipment (a tractor) with a form tool hitched begins a transition operation, jolts generated by a bumpy road surface will momentarily cause relative movement of a cylinder body of the lifting oil cylinder and a piston rod, thereby producing high pressure oil in the rodless cavity or the rod cavity, since the first overflow pressure maintaining branch oil path and the second overflow pressure maintaining branch oil path are arranged between the first working oil path and the second working oil path, the high pressure oil may automatically flow to the other cavity of the lifting oil cylinder through the first overflow pressure maintaining branch oil path or the second overflow pressure maintaining branch oil path such that the jolt amplitude of the hitched farm tool is less than that of the towing agricultural equipment, achieving active jolt reduction; in the automatic oil charge step described above, the involvement of an electrically controlled hydraulic valve is not required, so there is no response lag phenomenon; before the completion of the automatic oil charge step, the electrically controlled hydraulic valve can be opened in advance, and hydraulic oil can be replenished from the main oil path to a cavity where high pressure oil flows out immediately by means of the electrically controlled hydraulic valve at the end of the automatic oil charge step, since the electrically controlled oil charge step described above can be intervened in advance, thus making up for the detrimental effects of the system's response lag, the responsiveness requirements on the electric control unit and the electrically controlled hydraulic valve are greatly reduced, increasing the active jolt reduction effect on the hitched farm tool.

In the transition operation, due to the different effective cross-sectional areas of the rodless cavity and the rod cavity of the lifting oil cylinder, when the cylinder body of the lifting oil cylinder momentarily ascends relative to the piston rod, the volume of hydraulic oil flowing out of the rodless cavity is greater than the volume of hydraulic oil required for the rod cavity, affecting the jolt reduction effect; similarly, when the cylinder body of the lifting oil cylinder momentarily descends relative to the piston rod of the lifting oil cylinder, the volume of hydraulic oil flowing out of the rod cavity is less than the volume of hydraulic oil required by the rodless cavity, so that a vacuum is formed in the rodless cavity, causing cavitation.

Additionally, when the hydraulic distributor is in the neutral working mode, the force of the farm tool acting on the lifting oil cylinder forms a high pressure on hydraulic oil, which is transmitted to the hydraulic distributor, and leakage is caused through the clearance between the valve body and the valve rod in the hydraulic distributor, causing the lift of a load of the farm tool.

### Summary

For the above deficiencies in the prior art, the present invention provides an intelligent control system of a hydraulic hitch device. The control system not only enables driving force required for axial movement of a valve rod of a hydraulic distributor to be small and a response speed to be fast, but also enables adjustable raising and lowering speeds of farm tools.

In order to solve the above technical problem, a technical solution adopted by the present invention is as follows:
provided is an intelligent control system of a hydraulic hitch device, including a lifting oil cylinder and a hydraulic distributor, wherein the hydraulic distributor includes a valve body and a valve rod arranged in the valve body, wherein the valve body is provided with a first working oil chamber communicating with a first working oil port, a second working oil chamber communicating with a second working oil port, a pressure oil chamber communicating with a pressure oil port, and an oil return chamber communicating with an oil return port, wherein the first working oil port communicates with a rodless cavity of the lifting oil cylinder through a first working oil path, the second working oil port communicates with a rod cavity of the lifting oil cylinder through a second working oil path, the pressure oil port communicates with a main oil path, and the oil return port communicates with an oil tank; the hydraulic distributor is provided with a neutral working position, a raising working position, a lowering working position and a floating working position; and the valve rod is provided with a plurality of valve rod sections for controlling the communication or disconnection of the corresponding oil chambers, one end of the valve rod is connected with a hydraulic push rod, and the other end of the valve rod is provided with a return spring; an accumulating oil path, including an accumulator, wherein the accumulator communicates with the first working oil path through a first one-way valve, the accumulator communicates with the second working oil path through a second one-way valve, and the accumulator communicates with the main oil path through a third one-way valve; the hydraulic push rod communicates with the accumulating oil path through an oil charge solenoid valve, the hydraulic push rod achieves oil return and pressure relief through an oil drain solenoid valve, and the oil charge solenoid valve and the oil drain solenoid valve are electrically connected to an electric control unit, respectively; a force sensor configured to detect information on a pulling force borne by a lower pull rod or an upper pull rod; a lifter position sensor configured to detect position information of a lifter; and a valve rod displacement sensor configured to detect displacement information of the valve rod of the hydraulic distributor; wherein the force sensor, the lifter position sensor and the valve rod displacement sensor are electrically connected to the electric control unit, respectively; wherein two adjacent valve rod sections of the valve rod are respectively provided with a raising speed control conical surface and a lowering speed control conical surface; when the hydraulic distributor is in the neutral working position, the pressure oil chamber communicates with the oil return chamber, the first working oil chamber is closed, and the second working oil chamber is closed; when the hydraulic distributor is in the raising working position, the pressure oil chamber is disconnected from the oil return chamber, a raising speed throttling clearance is formed between the valve rod and the valve body at the raising speed control conical surface, the first working oil chamber communicates with the pressure oil chamber through the raising speed throttling clearance, and the second working oil chamber communicates with the oil return chamber; when the hydraulic distributor is in the lowering working position, the pressure oil chamber is disconnected from the oil return chamber, a lowering speed throttling clearance is formed between the valve rod and the valve body at the lowering speed control conical surface, the first working oil chamber communicates with the oil return chamber through the lowering speed throttling clearance, and the second working oil chamber communicates with the pressure oil chamber; and when the hydraulic distributor is in the floating working position, the pressure oil chamber, the first working oil chamber, and the second working oil chamber respectively communicate with the oil return chamber.

According to a further aspect of the invention, the hydraulic distributor is provided with a neutral charging working position, and the pressure oil chamber is disconnected from the oil return chamber, the first working oil chamber is closed, and the second working oil chamber is closed when the hydraulic distributor is in the neutral charging working position.

According to a further aspect of the invention, the hydraulic distributor is provided with a floating charging working position, and the pressure oil chamber is disconnected from the oil return chamber, the first working oil chamber communicates with the oil return chamber, and the second working oil chamber communicates with the oil return chamber when the hydraulic distributor is in the floating charging working position.

According to a further aspect of the invention, a first overflow pressure maintaining branch oil path for performing overflow pressure maintaining on the rodless cavity of the lifting oil cylinder and a second overflow pressure maintaining branch oil path for performing overflow pressure maintaining on the rod cavity of the lifting oil cylinder are arranged between the first working oil path and the second working oil path; wherein the first overflow pressure maintaining branch oil path includes a first overflow pressure maintaining valve, and an opening pressure of the first overflow pressure maintaining valve is not less than a pressure of a hitched farm tool to the first working oil port when the hydraulic distributor is in a neutral state; and the second overflow pressure maintaining branch oil path includes a second overflow pressure maintaining valve.

According to a further aspect of the invention, one valve rod section of the valve rod is provided with a throttling step surface; the hydraulic distributor is provided with a jolt reduction working position, the throttling step surface and a corresponding inner hole of the valve body form a throttling clearance that communicates the second working oil chamber with the oil return chamber when the hydraulic distributor is in the jolt reduction working position, the pressure oil chamber communicates with the oil return chamber, and the first working oil chamber is closed.

According to a further aspect of the invention, the first working oil path is provided with a stop valve including a valve sleeve, a valve element, a return spring and a gland device, wherein the valve sleeve includes a first valve sleeve and a second valve sleeve which are axially arranged and fixedly connected together, and the return spring is located in the second valve sleeve and clamped between the gland device and the valve element; the first valve sleeve is provided with a first cavity and a first oil port communicating with the first cavity, and the second valve sleeve is provided with a second cavity and a second oil port communicating with the second cavity; the first oil port communicates with the first working oil port of the hydraulic distributor, and the second oil port communicates with the rodless cavity of the lifting oil cylinder; of course, it is also possible to provide that the first oil port communicates with the rodless cavity of the lifting oil cylinder, and the second oil port communicates with the second working oil port of the hydraulic distributor; the valve element includes a first valve element section and a second valve element section which have a same outer diameter, wherein an annular groove is formed between the first valve element section and the second valve element section, the annular groove corresponds to the first cavity in position, the first valve element section is in sliding fit with the first valve sleeve, the second valve element section is in sliding fit with the second valve sleeve, the second valve element section is provided with a flange near the annular groove, the flange is provided with a valve element sealing conical surface, an end portion of the first valve sleeve is provided with a valve sleeve sealing conical surface, the valve element sealing conical surface differs from the valve sleeve sealing conical surface in taper, and the first cavity is disconnected from the second cavity when the valve element sealing conical surface abuts against an inner edge of the valve sleeve sealing conical surface under the action of the return spring; and the valve element is connected to a linear actuator through a connection device, the linear actuator is electrically connected to the electric control unit, and when the linear actuator is energized, the valve element is driven to move, so that the valve element sealing conical surface is disengaged from the valve sleeve sealing conical surface, and then the first cavity communicates with the second cavity.

According to a further aspect of the invention, an open free end of the first valve sleeve is a hydraulic control port, the hydraulic control port communicates with the main oil path, and a preset spring force of the return spring is greater than a thrust force of oil pressure on the valve element when the main oil path is in a pressure relief state but less than a thrust force of oil pressure on the valve element when the main oil path is in a high pressure state.

According to a further aspect of the invention, the connecting device includes a pull rod and a pull rod sleeve, wherein the pull rod extends from the gland device into the second valve sleeve, and is fixedly connected to the valve element, the pull rod sleeve is slidably connected to the pull rod, the pull rod sleeve is connected to a moving shaft of the linear actuator, and the linear actuator drives the pull rod sleeve to drive the pull rod to move axially.

According to a further aspect of the invention, the oil charge solenoid valve and the oil drain solenoid valve each are a normally closed two position two-way solenoid valve.

After the above technical solution is adopted, the technical effects achieved by the present invention are as follows:
1) since two adjacent valve rod sections of the valve rod are respectively provided with the raising speed control conical surface and the lowering speed control conical surface, when the hydraulic distributor is in the raising working position, the pressure oil chamber of the hydraulic distributor is disconnected from the oil return chamber, the raising speed throttling clearance is formed between the valve rod and the valve body at the raising speed control conical surface, the first working oil chamber communicates with the pressure oil chamber through the raising speed throttling clearance, the second working oil chamber communicates with the oil return chamber, and the axial displacement of the valve rod is controlled by the electric control unit, such that a throttling area of the raising speed throttling clearance can be changed, thereby being capable of controlling the raising speed of the farm tool; similarly, when the hydraulic distributor is in the lowering working position, the pressure oil chamber of the hydraulic distributor is disconnected from the oil return chamber, the lowering speed throttling clearance is formed between the valve rod and the valve body at the lowering speed control conical surface, the first working oil chamber communicates with the oil return chamber through the lowering speed throttling clearance, the second working oil chamber communicates with the pressure oil chamber, and the axial displacement of the valve rod is controlled by the electric control unit, such that a throttling area of the lowering speed throttling clearance can be changed, thereby being capable of controlling the lowering speed of the farm tool.
   Meanwhile, since the present invention employs the accumulating oil path, the accumulator of the accumulating oil path communicates with the first working oil path through the first one-way valve, the accumulator communicates with the second working oil path through the second one-way valve, and the accumulator communicates with the main oil path through the third one-way valve; and the hydraulic push rod communicates with the accumulating oil path through the oil charge solenoid valve, the hydraulic push rod achieves oil return and pressure relief through the oil drain solenoid valve, and the oil charge solenoid valve and the oil drain solenoid valve are electrically connected to the electric control unit, respectively. Therefore, the accumulator can be charged when the hydraulic distributor is in the raising working position, the lowering working position and the neutral working position, i.e. when the farm tool is in a raising state, a lowering state and a neutral state. High pressure oil within the accumulator pushes the hydraulic push rod, and the valve rod of the hydraulic distributor moves to the left (shown in the figure) only when the oil charge solenoid valve is energized open, and hydraulic oil of the hydraulic push rod is subjected to pressure relief, and the valve rod of the hydraulic distributor moves to the right (shown in the figure) under the action of the return spring only when the oil drain solenoid valve is energized open. The electric control unit achieves the raising, lowering, neutralizing, and floating functions of the farm tool by detecting force information of the lower pull rod or the upper pull rod by the force sensor, detecting position information of the lifter by the lifter position sensor, controlling opening and closing of the oil charge solenoid valve and the oil drain solenoid valve, controlling the movement of the valve rod of the hydraulic distributor, and feeding back position information of the valve rod by the valve rod displacement sensor. Therefore, the driving force required for axial movement of the valve rod of the hydraulic distributor is small and the response speed is fast.
2) Since the first working oil path is provided with the stop valve, in the neutral state, the stop valve is closed under the action of the elastic force of the return spring, the connection between the rodless cavity of the lifting oil cylinder and the hydraulic distributor is cut off, such that the lift of a load of the farm tool caused by leakage of the hydraulic distributor is avoided.
   Since the valve element of the stop valve of the present invention includes the first valve element section and the second valve element section which have the same outer diameter, the annular groove is formed between the first valve element section and the second valve element section, the annular groove corresponds to the first cavity of the first valve sleeve in position, the first valve element section is in sliding fit with the first valve sleeve, the second valve element section is in sliding fit with the second valve sleeve, the second valve element sleeve is provided with the flange near the annular groove, the flange is provided with the valve element sealing conical surface, the end portion of the first valve sleeve is provided with the valve sleeve sealing conical surface, the valve element sealing conical surface differs from the valve sleeve sealing conical surface in taper, under the action of the spring force of the return spring, when the valve element sealing conical surface abuts against the inner edge of the valve sleeve sealing conical surface, hydraulic oil can fill the inner edge of the valve sleeve sealing conical surface, so that the first cavity is disconnected from the second cavity, and since the first valve element section and the second valve element section have the same outer diameter, which is also the same as an inner diameter of the first valve sleeve and an inner diameter of the second valve sleeve, in the first cavity, the acting force of hydraulic oil on the valve element is zero, and in the second cavity, the acting force of hydraulic oil on the valve element is also zero, so that opening the valve only overcomes the spring force of the return spring, and is not affected at all by hydraulic oil flowing through the valve, and thus the valve is more sensitive to operate and is more reliable to use.
3) During the transition operation, when the hydraulic distributor is in the jolt reduction working position, since one valve rod section of the valve rod of the hydraulic distributor is provided with the throttling step surface, the throttling step surface and the corresponding inner hole of the valve body form the throttling clearance that communicates the second working oil chamber with the oil return chamber, the pressure oil chamber communicates with the oil return chamber, the first working oil chamber is closed, the effective cross-sectional areas of the rodless cavity and the rod cavity of the lifting oil cylinder are different, and when the cylinder body of the lifting oil cylinder momentarily ascends relative to the piston rod, the volume of hydraulic oil flowing out of the rodless cavity is greater than the volume of hydraulic oil required for the rod cavity, and the excess hydraulic oil will flow from the rod cavity to the oil return chamber through the throttling clearance; similarly, when the cylinder body of the lifting oil cylinder momentarily descends relative to the piston rod of the lifting oil cylinder, the volume of hydraulic oil flowing out of the rod cavity is not sufficient to fill a space vacated by the rodless cavity, and therefore a suction force will be generated, and the rodless cavity can suck oil from the oil return chamber through the throttling clearance, avoiding cavitation.
4) The accumulator cannot be charged in the floating state and the neutral state but under the condition that the farm tool falls to the ground for a long time, the shutdown condition, etc., which may result in low or even zero pressure inside the accumulator, at this time, the electric control unit can only control the movement of the valve rod to the right (shown in the figure) but cannot control the movement of the valve rod to the left. In order to achieve the purpose of also controlling bidirectional movement of the valve rod of the hydraulic distributor under these special working conditions, in the present invention, the hydraulic distributor is provided with the neutral charging working position and the floating charging working position, a control unit issues control instructions, the oil charge solenoid valve is opened to control the valve rod to move left for a certain period of time (for example, 0.5s), valve rod displacement is detected by the valve rod displacement sensor, and if there is no left movement, it is determined that the accumulator is in pressure deficit, and the oil drain solenoid valve is then controlled to open, and under the action of the return spring, the valve rod is pushed to move right to the neutral charging working position or the floating charging working position, and after the accumulator is charged, then left movement of the valve rod is controlled.

### Brief Description of Figures

Fig. 1 is a hydraulic principle diagram of an embodiment of an intelligent control system of a hydraulic hitch device according to the present invention;
Fig. 2 is a longitudinal sectional view of a hydraulic distributor in Fig. 1 in a raising working position;
Fig. 3 is a longitudinal sectional view of the hydraulic distributor in Fig. 1 in a jolt reduction working position;
Fig. 4 is a longitudinal sectional view of the hydraulic distributor in Fig. 1 in a neutral working position;
Fig. 5 is a longitudinal sectional view of the hydraulic distributor in Fig. 1 in a neutral charging working position;
Fig. 6 is a longitudinal sectional view of the hydraulic distributor in Fig. 1 in a lowering working position;
Fig. 7 is a longitudinal sectional view of the hydraulic distributor in Fig. 1 in a floating working position;
Fig. 8 is a longitudinal sectional view of the hydraulic distributor in Fig. 1 in a floating charging working position;
Fig. 9 is a longitudinal sectional view of a valve rod in Figs. 2-8;
Fig. 10 is a longitudinal sectional view of a stop valve in Fig. 1;
Fig. 11 is an enlarged partial view at I in Fig. 10; and
Fig. 12 is a longitudinal sectional view of a valve element in Fig. 10;
in the drawings:
001-main oil path, 10-stop valve, 101-first valve sleeve, 1011-valve sleeve sealing conical surface, 101a-first cavity, 101A-first oil port, 102-second valve sleeve, 102b-second cavity, 102B-second oil port, 103-gland device, 104-return spring, 105-valve element, 1051-first valve element section, 1052-second valve element section, 1053-flange, 1053A-valve element sealing conical surface, 1054-annular groove, 106-pull rod, 107-pull rod sleeve, 108-linear actuator; d-outer diameter, and α-difference in angle between a valve element sealing conical surface and a valve sleeve sealing conical surface;
20-lifting oil cylinder, 21-first overflow pressure maintaining valve, 22-second overflow pressure maintaining valve, 30-hydraulic distributor, 301-valve body, 302-valve rod, 302A-raising speed control conical surface, 302B-lowering speed control conical surface, 302C-throttling step surface, 31-return spring, 32-hydraulic push rod, 41-valve rod displacement sensor, 42-force sensor, 43-lifter position sensor, 44-radar velocity sensor, 45-rotational speed sensor, 50-first one-way valve, 60-second one-way valve, 71-oil charge solenoid valve, 72-oil drain solenoid valve, 80-accumulator, and 90-third one-way valve;
A-first working oil port, B-second working oil port, P-pressure oil port, and T-oil return port; and
a-first working oil chamber, b-second working oil chamber, p-pressure oil chamber, t-oil return chamber, and m-throttling clearance.

### Detailed Description

The present invention is further explained below with reference to the drawings and the embodiments.

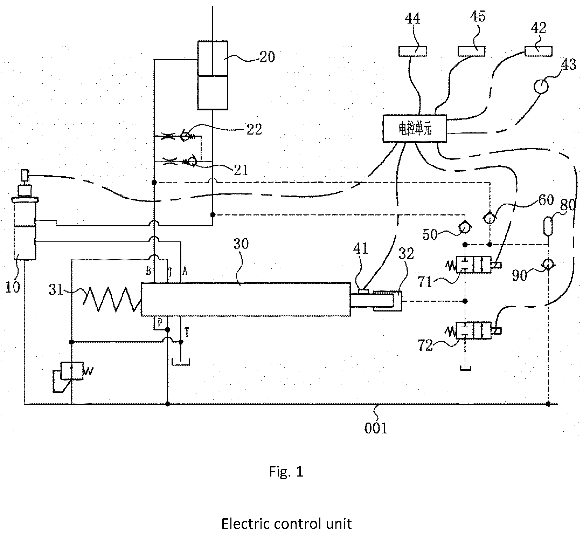

As shown in Fig. 1, an intelligent control system of a hydraulic hitch device may perform intelligent control on a hydraulic hitch device of a tractor, and may also perform intelligent control on a hydraulic hitch device of other agricultural equipment.

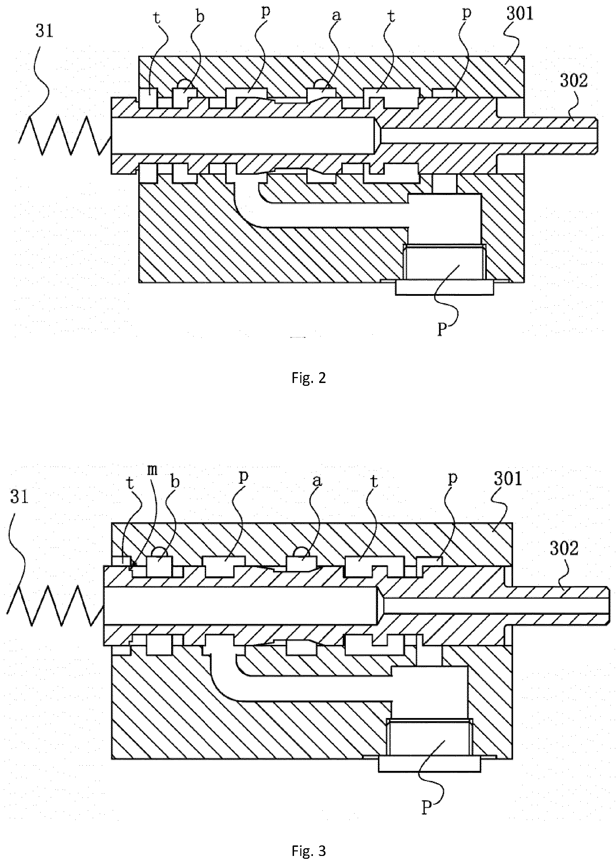

With reference to Fig. 2, a hydraulic distributor 30 includes a valve body 301 and a valve rod 302 arranged in the valve body 301, wherein the valve body 301 is provided with a first working oil chamber a communicating with a first working oil port A, a second working oil chamber b communicating with a second working oil port B, a pressure oil chamber p communicating with a pressure oil port P, and an oil return chamber t communicating with an oil return port T.

As shown in Fig. 1, the first working oil port A communicates with a rodless cavity of a lifting oil cylinder 20 through a first working oil path, the second working oil port B communicates with a rod cavity of the lifting oil cylinder 20 through a second working oil path, the pressure oil port P communicates with a main oil path 001, and the oil return port T communicates with an oil tank. One end of the valve rod 302 is connected with a hydraulic push rod 32, and the other end of the valve rod 302 is provided with a return spring 31.

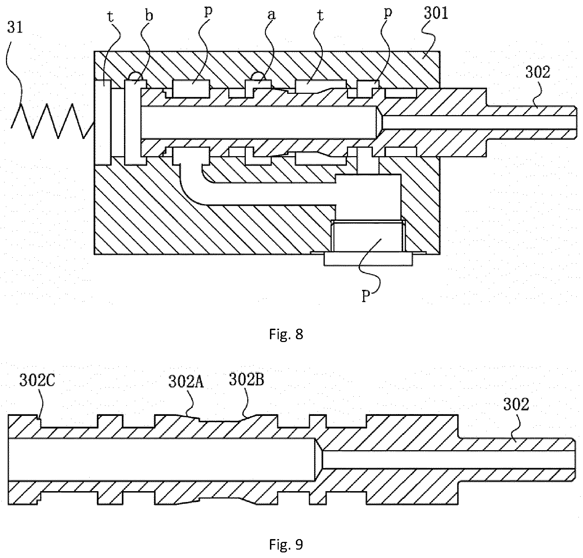

As shown in Fig. 9, the valve rod 302 is provided with a plurality of valve rod sections for controlling the communication or disconnection of the corresponding oil chambers, wherein two adjacent valve rod sections are respectively provided with a raising speed control conical surface 302A and a lowering speed control conical surface 302B, and the two conical surfaces cooperate with the valve body 301 for achieving control of the raising speed and the lowering speed of a farm tool. The other valve rod section of the valve rod is provided with a throttling step surface 302C, and the throttling step surface 302C and a corresponding internal hole of the valve body 301 form a throttling clearance that communicates the second working oil chamber b with the oil return chamber t for compensating for the difference in the volume of the rodless cavity and the rod cavity of the lifting oil cylinder in the jolt reduction working mode. These two structures are two important points of the present invention and are also described in detail below.

As shown in Fig. 1, in order to hydraulically drive the valve rod 302 of the hydraulic distributor 30, the intelligent control system of the present invention is provided with an accumulating oil path including an accumulator 80, wherein the accumulator 80 communicates with the first working oil path through a first one-way valve 50, the accumulator 80 communicates with the second working oil path through a second one-way valve 60, and the accumulator 80 communicates with the main oil path 001 through a third one-way valve 90; the hydraulic push rod 32 communicates with the accumulating oil path through an oil charge solenoid valve 71, the hydraulic push rod 32 achieves oil return and pressure relief through an oil drain solenoid valve 72, the oil charge solenoid valve 71 and the oil drain solenoid valve 72 are electrically connected to an electric control unit, respectively, and the oil charge solenoid valve 71 and the oil drain solenoid valve 72 each are preferably a normally closed two position two-way solenoid valve.

As shown in Fig. 1, a force sensor 42 is configured to detect information on a pulling force borne by a lower pull rod or an upper pull rod; a lifter position sensor 43 is configured to detect position information of a lifter; a valve rod displacement sensor 41 is configured to detect displacement information of the valve rod of the hydraulic distributor; and the force sensor 42, the lifter position sensor 43 and the valve rod displacement sensor 41 are electrically connected to the electric control unit, respectively. In this embodiment, a radar velocity sensor 44 and a rotational speed sensor 45 are also provided.

In order to adapt to active jolt reduction of hitched agricultural equipment in transition operation, in the present invention, a jolt reduction system is also provided. As shown in Fig. 1, a first overflow pressure maintaining branch oil path for performing overflow pressure maintaining on the rodless cavity of the lifting oil cylinder 20 and a second overflow pressure maintaining branch oil path for performing overflow pressure maintaining on the rod cavity of the lifting oil cylinder 20 are arranged between the first working oil path and the second working oil path; wherein the first overflow pressure maintaining branch oil path includes a first overflow pressure maintaining valve 21, and an opening pressure of the first overflow pressure maintaining valve 21 is not less than a pressure of a hitched farm tool to the first working oil port A when the hydraulic distributor 30 is in a neutral state; and the second overflow pressure maintaining branch oil path includes a second overflow pressure maintaining valve 22. The working principle of active jolt reduction refers to that in Chinese invention patent CN111520367 A, which is not repeated here.

As shown in Fig. 3, during the transition operation, the hydraulic distributor 30 is in a jolt reduction working position, one valve rod section of the valve rod 302 of the hydraulic distributor is provided with a throttling step surface 302C, the throttling step surface 302C and a corresponding internal hole of the valve body 301 form a throttling clearance m that communicates the second working oil chamber b with the oil return chamber t, the pressure oil chamber p communicates with the oil return chamber t, and the first working oil chamber a is closed. Due to the different effective cross-sectional areas of the rodless cavity and the rod cavity of the lifting oil cylinder 20, when a cylinder body of the lifting oil cylinder 20 momentarily ascends relative to a piston rod, the volume of hydraulic oil flowing out of the rodless cavity is greater than the volume of hydraulic oil required for the rod cavity, and the excess hydraulic oil will flow from the rod cavity to the oil return chamber t through the throttling clearance m; similarly, when the cylinder body of the lifting oil cylinder 20 momentarily descends relative to the piston rod of the lifting oil cylinder, the volume of hydraulic oil flowing out of the rod cavity is not sufficient to fill a space vacated by the rodless cavity, and therefore a suction force will be generated, and the rodless cavity can suck oil from the oil return chamber t through the throttling clearance, avoiding cavitation.

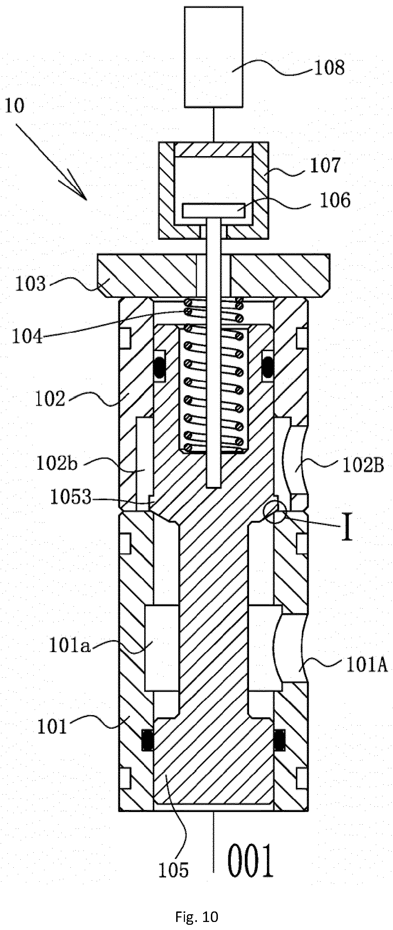

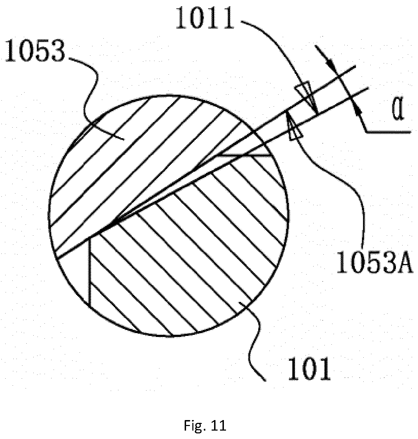

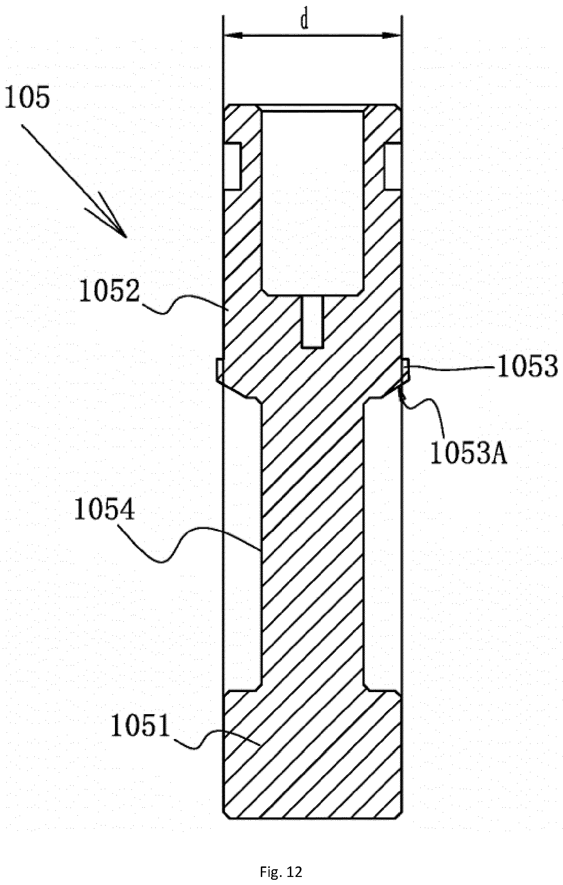

As shown in Fig. 1 and Figs. 10, 11 and 12, in order to prevent oil leakage of the hydraulic distributor 30 in the neutral state, a stop valve 10 is arranged in the first working oil path.

The stop valve 10 includes a valve sleeve, a valve element 105, a return spring 104, and a gland device 103, wherein the valve sleeve includes a first valve sleeve 101 and a second valve sleeve 102 which are axially arranged and fixedly connected together, and the return spring 104 is located in the second valve sleeve 102 and clamped between the gland device 103 and the valve element 105.

The first valve sleeve 101 is provided with a first cavity 101a, and a first oil port 101A communicating with the first cavity 101a, the second valve sleeve 102 is provided with a second cavity 102b, and a second oil port 102B communicating with the second cavity 102b, the first oil port communicates with the first working oil port A of the hydraulic distributor, and the second oil port 102B communicates with the rodless cavity of the lifting oil cylinder 20, it is also possible to switch the two, i.e. the first oil port 101 A communicates with the rodless cavity of the lifting oil cylinder, and the second oil port 102B communicates with the first working oil port A of the hydraulic distributor. The valve element 105 includes a first valve element section 1051 and a second valve element section 1052 which have a same outer diameter d, wherein an annular groove 1054 is formed between the first valve element section 1051 and the second valve element section 1052, the annular groove 1054 corresponds to the first cavity 101a in position, the first valve element section 1051 is in sliding fit with the first valve sleeve 101, the second valve element section 1052 is in sliding fit with the second valve sleeve 102, the second valve element section 1052 is provided with a flange 1053 near the annular groove, the flange 1053 is provided with a valve element sealing conical surface 1053A, an end portion of the first valve sleeve 101 is provided with a valve sleeve sealing conical surface 1011, the valve element sealing conical surface 1053A differs from the valve sleeve sealing conical surface 1011 in taper, with an angle difference α, and the first cavity 101a is disconnected from the second cavity 102b when the valve element sealing conical surface 1053A abuts against an inner edge of the valve sleeve sealing conical surface 1011 under the action of the return spring 104.

The valve element 105 is connected to a linear actuator 108 through a connecting device, the linear actuator 108 is electrically connected to the electric control unit, and when the linear actuator 108 is energized, the valve element 105 is driven to move, so that the valve element sealing conical surface 1053A is disengaged from the valve sleeve sealing conical surface 1011, and then the first cavity 101a communicates with the second cavity 102b. The connecting device includes a pull rod 106 and a pull rod sleeve 107, wherein the pull rod 106 extends from the gland device 103 into the second valve sleeve 102, and is fixedly connected to the valve element 105, the pull rod sleeve 107 is slidably connected to the pull rod 106, the pull rod sleeve 107 is connected to a moving shaft of the linear actuator 108, and the linear actuator 108 drives the pull rod sleeve 107 to drive the pull rod 106 to move axially. The linear actuator 108 may be a linear motor or an electromagnet or the like.

An open free end of the first valve sleeve 101 is a hydraulic control port, the hydraulic control port communicates with the main oil path 001, and a preset spring force of the return spring 104 is greater than a thrust force of oil pressure on the valve element 105 when the main oil path 001 is in a pressure relief state but less than a thrust force of oil pressure on the valve element 105 when the main oil path 001 is in a high pressure state, i.e., hydraulic oil will push the valve element 105 open when the main oil path 001 is in the high pressure state. When the hydraulic distributor is in the raising mode and the lowering mode, the stop valve 10 is opened to be in a communication state.

The stop valve 10 is a normally closed stop valve, in a neutral state, the stop valve 10 is closed under the spring force of the return spring, the connection between the rodless cavity of the lifting oil cylinder 20 and the hydraulic distributor 30 is cut off, such that the lift of a load of the farm tool caused by leakage of the hydraulic distributor is avoided, meeting the requirements of maintainance of the lift of the load of the farm tool.

In the present invention, the valve element sealing conical surface 1053A differs from the valve sleeve sealing conical surface 1011 in taper, under the action of the return spring 104, when the valve element sealing conical surface 1053A abuts against the inner edge of the valve sleeve sealing conical surface 1011, hydraulic oil can fill the inner edge of the valve sleeve sealing conical surface, so that the first cavity 101a is disconnected from the second cavity 102b, and since the first valve element section 1051 and the second valve element section 1052 have the same outer diameter d, the first valve element section 1051 is in sliding fit with the first valve sleeve 101, the second valve element section 1052 is in sliding fit with the second valve sleeve 102, the outer diameter d of the first valve element section 1051 is the same as an inner diameter of the first valve sleeve 101, the outer diameter d of the second valve element section 1052 is also the same as an inner diameter of the second valve sleeve 102, in the first cavity 101a, the acting force of hydraulic oil on the valve element 105 is zero, and in the second cavity 102b, the acting force of hydraulic oil on the valve element 105 is also zero, so that opening the valve only overcomes the spring force of the return spring, and is not affected at all by hydraulic oil flowing through the valve, and thus the valve is more sensitive to operate and is more reliable to use.

In this embodiment, a combination of electrical control and hydraulic control is used for the control of the stop valve 10, the hydraulic control provides a high opening force, is convenient and energy-saving, but is influenced by oil pressure of the main oil path, and the electrical control is not influenced by the oil pressure of the main oil path, and can be used at any time, and especially when the hydraulic control cannot be carried out in the floating state, the electrical control is irreplaceable. Of course, only the electrical control may be adopted if the problem of consuming electrical energy is not taken into account.

In this embodiment, the hydraulic distributor is provided with a neutral working position, a neutral charging working position, a raising working position, a lowering working position, a floating working position, a floating charging working position, and a jolt reduction working position. Figs. 2-8 sequentially show a cooperative relationship of components in the working positions.

As shown in Fig. 2, when the hydraulic distributor 30 is in the raising working position, the pressure oil chamber p is disconnected from the oil return chamber t, a raising speed throttling clearance is formed between the valve rod and the valve body at the raising speed control conical surface, the first working oil chamber a communicates with the pressure oil chamber p through the raising speed throttling clearance, and the second working oil chamber b communicates with the oil return chamber t. The stop valve 10 is opened under the action of high pressure oil in the main oil path 001. High pressure oil in the rodless cavity of the lifting oil cylinder and the high pressure oil in the main oil path 001 simultaneously charge the accumulator 80. The electric control unit controls the axial displacement of the valve rod 302, which may control the raising speed of the farm tool.

As shown in Fig. 3, when the hydraulic distributor is in the jolt reduction working position, the throttling step surface and the corresponding internal hole of the valve body form the throttling clearance m that communicates the second working oil chamber b with the oil return chamber t, the pressure oil chamber p communicates with the oil return chamber t, and the first working oil chamber a is closed.

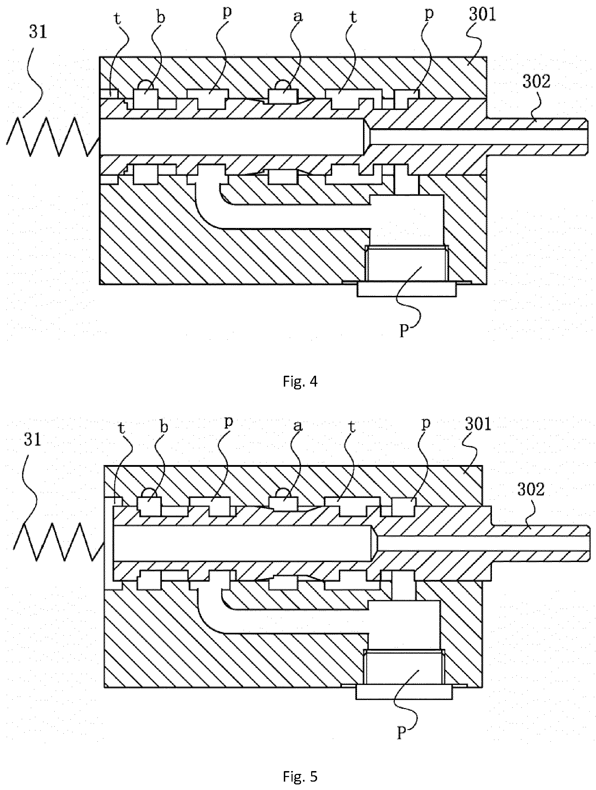

As shown in Fig. 4, when the hydraulic distributor 30 is in the neutral working position, the pressure oil chamber p communicates with the oil return chamber t, the first working oil chamber a is closed, and the second working oil chamber b is closed. The stop valve 10 is closed, and the high pressure oil in the rodless cavity of the lifting oil cylinder charges the accumulator.

As shown in Fig. 5, when the hydraulic distributor 30 is in the neutral charging working position, the pressure oil chamber p is disconnected from the oil return chamber t, the first working oil chamber a is closed, and the second working oil chamber b is closed. The main oil path 001 charges the accumulator 80 through the one-way valve 90.

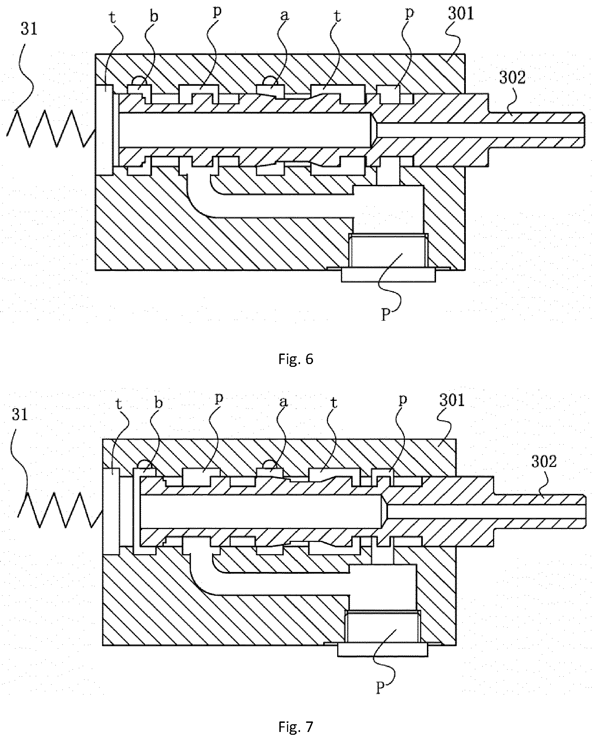

As shown in Fig. 6, when the hydraulic distributor 30 is in the lowering working position, the pressure oil chamber p is disconnected from the oil return chamber t, a lowering speed throttling clearance is formed between the valve rod and the valve body at the lowering speed control conical surface, the first working oil chamber a communicates with the oil return chamber t through the lowering speed throttling clearance, and the second working oil chamber b communicates with the pressure oil chamber p. The stop valve 10 is opened under the action of high pressure oil in the main oil path 001. High pressure oil in the rod cavity of the lifting oil cylinder and the high pressure oil in the main oil path 001 simultaneously charge the accumulator 80. The electric control unit controls the axial displacement of the valve rod 302, which may control the lowering speed of the farm tool.

As shown in Fig. 7, when the hydraulic distributor 30 is in the floating working position, the pressure oil chamber p, the first working oil chamber a and the second working oil chamber b respectively communicate with the oil return chamber t. The hydraulic oil in the main oil path 001 has low pressure, and the electric control unit controls the linear actuator 108 to move upward (in the direction shown in the figure) to push the valve element 105 of the stop valve to open against the spring force of the return spring 104.

As shown in Fig. 8, when the hydraulic distributor is in the floating charging working position, the pressure oil chamber p is disconnected from the oil return chamber t, the first working oil chamber a communicates with the oil return chamber t, and the second working oil chamber b communicates with the oil return chamber t. The main oil path 001 charges the accumulator 80 through the one-way valve 90.

In the present invention, when the hydraulic distributor is in the raising working position, the pressure oil chamber p of the hydraulic distributor 30 is disconnected from the oil return chamber t, the raising speed throttling clearance is formed between the valve rod 302 and the valve body 301 at the raising speed control conical surface 302A, the first working oil chamber a communicates with the pressure oil chamber p through the raising speed throttling clearance, the second working oil chamber b communicates with the oil return chamber t, and the axial displacement of the valve rod 302 is controlled by the electric control unit, such that the throttling area of the raising speed throttling clearance can be changed, thereby being capable of controlling the raising speed of the farm tool; similarly, when the hydraulic distributor 30 is in the lowering working position, the pressure oil chamber p of the hydraulic distributor is disconnected from the oil return chamber t, the lowering speed throttling clearance is formed between the valve rod 302 and the valve body at the lowering speed control conical surface 302B, the first working oil chamber a communicates with the oil return chamber t through the lowering speed throttling clearance, the second working oil chamber b communicates with the pressure oil chamber p, and the axial displacement of the valve rod 302 is controlled by the electric control unit, such that the throttling area of the lowering speed throttling clearance can be changed, thereby being capable of controlling the lowering speed of the farm tool.

In the present invention, the accumulator 80 may be charged when the hydraulic distributor 30 is in the raising working position, the lowering working position, and the neutral working position, i.e. when the farm tool is in the raising state, the lowering state, and the neutral state. High pressure oil within the accumulator 80 pushes the hydraulic push rod 32, and the valve rod 302 of the hydraulic distributor moves to the left as shown in the figure only when the oil charge solenoid valve 71 is energized open, and hydraulic oil of the hydraulic push rod 32 is subjected to pressure relief, and the valve rod 302 of the hydraulic distributor moves to the right as shown in the figure under the action of the return spring 31 only when the oil drain solenoid valve 72 is energized open. The electric control unit achieves the raising, lowering, neutralizing, and floating functions of the farm tool by detecting force information of the lower pull rod or the upper pull rod by the force sensor, detecting position information of the lifter by the lifter position sensor, controlling opening and closing of the oil charge solenoid valve and the oil drain solenoid valve, controlling the movement of the valve rod of the hydraulic distributor, and feeding back position information of the valve rod by the valve rod displacement sensor. Therefore, the driving force required for axial movement of the valve rod of the hydraulic distributor is small and the response speed is fast.

In the present invention, the accumulator 80 cannot be charged in the floating state and the neutral state but under the condition that the farm tool falls to the ground for a long time, the shutdown condition, etc., which may result in low or even zero pressure inside the accumulator 80, at this time, the electric control unit can only control the movement of the valve rod to the right as shown in the figure but cannot control the movement of the valve rod to the left. In order to achieve the purpose of also controlling bidirectional movement of the valve rod 302 of the hydraulic distributor under these special working conditions, in the present invention, the hydraulic distributor 30 is provided with the neutral charging working position and the floating charging working position, a control unit issues control instructions, the oil charge solenoid valve is opened to control the valve rod 302 to move left for a certain period of time (for example, 0.5s), valve rod displacement is detected by the valve rod displacement sensor 41, and if there is no left movement, it is determined that the accumulator is in pressure deficit, and the oil drain solenoid valve is then controlled to open, and under the action of the return spring 31, the valve rod is pushed to move right to the neutral charging working position or the floating charging working position, and after the accumulator is charged, then left movement of the valve rod is controlled.

The present invention is not limited to the above embodiments, but only by the scope of the appended claims.

### Industrial applicability

1) Since two adjacent valve rod sections of the valve rod are respectively provided with the raising speed control conical surface and the lowering speed control conical surface, when the hydraulic distributor is in the raising working position, the pressure oil chamber of the hydraulic distributor is disconnected from the oil return chamber, the raising speed throttling clearance is formed between the valve rod and the valve body at the raising speed control conical surface, the first working oil chamber communicates with the pressure oil chamber through the raising speed throttling clearance, the second working oil chamber communicates with the oil return chamber, and the axial displacement of the valve rod is controlled by the electric control unit, such that a throttling area of the raising speed throttling clearance can be changed, thereby being capable of controlling the raising speed of the farm tool; similarly, when the hydraulic distributor is in the lowering working position, the pressure oil chamber of the hydraulic distributor is disconnected from the oil return chamber, the lowering speed throttling clearance is formed between the valve rod and the valve body at the lowering speed control conical surface, the first working oil chamber communicates with the oil return chamber through the lowering speed throttling clearance, the second working oil chamber communicates with the pressure oil chamber, and the axial displacement of the valve rod is controlled by the electric control unit, such that a throttling area of the lowering speed throttling clearance can be changed, thereby being capable of controlling the lowering speed of the farm tool.
2) Since the first working oil path is provided with the stop valve, in the neutral state, the stop valve is closed under the action of the elastic force of the return spring, the connection between the rodless cavity of the lifting oil cylinder and the hydraulic distributor is cut off, such that the lift of a load of the farm tool caused by leakage of the hydraulic distributor is avoided. Moreover, opening the stop valve only overcomes the spring force of the return spring, and is not affected at all by hydraulic oil flowing through this valve, and thus the stop valve is more sensitive to operate and is more reliable to use.
3) During the transition operation, when the hydraulic distributor is in the jolt reduction working position, since one valve rod section of the valve rod of the hydraulic distributor is provided with the throttling step surface, the throttling step surface and the corresponding inner hole of the valve body form the throttling clearance that communicates the second working oil chamber with the oil return chamber, the pressure oil chamber communicates with the oil return chamber, the first working oil chamber is closed, the effective cross-sectional areas of the rodless cavity and the rod cavity of the lifting oil cylinder are different, and when the cylinder body of the lifting oil cylinder momentarily ascends relative to the piston rod, the volume of hydraulic oil flowing out of the rodless cavity is greater than the volume of hydraulic oil required for the rod cavity, and the excess hydraulic oil will flow from the rod cavity to the oil return chamber through the throttling clearance; similarly, when the cylinder body of the lifting oil cylinder momentarily descends relative to the piston rod of the lifting oil cylinder, the volume of hydraulic oil flowing out of the rod cavity is not sufficient to fill a space vacated by the rodless cavity, and therefore a suction force will be generated, and the rodless cavity can suck oil from the oil return chamber through the throttling clearance, avoiding cavitation.

## Claims

1. An intelligent control system of a hydraulic hitch device, comprising:
a lifting oil cylinder (20) and a hydraulic distributor (30), wherein the hydraulic distributor (30) comprises a valve body (301) and a valve rod (302) arranged in the valve body (301), wherein the valve body (301) is provided with a first working oil chamber (a) communicating with a first working oil port (A), a second working oil chamber (b) communicating with a second working oil port (B), a pressure oil chamber (p) communicating with a pressure oil port (P), and an oil return chamber (t) communicating with an oil return port (T), wherein the first working oil port (A) communicates with a rodless cavity of the lifting oil cylinder (20) through a first working oil path, the second working oil port (B) communicates with a rod cavity of the lifting oil cylinder (20) through a second working oil path, the pressure oil port (P) communicates with a main oil path (001), and the oil return port (T) communicates with an oil tank; and the hydraulic distributor (30) is provided with a neutral working position, a raising working position, a lowering working position and a floating working position; and
the valve rod (302) is provided with a plurality of valve rod sections for controlling the communication or disconnection of the corresponding oil chambers, one end of the valve rod (302) is connected with a hydraulic push rod (32), and the other end of the valve rod (302) is provided with a return spring (31);
an accumulating oil path, comprising an accumulator (80), wherein the accumulator (80) communicates with the first working oil path through a first one-way valve (50), the accumulator (80) communicates with the second working oil path through a second one-way valve (60), and the accumulator (80) communicates with the main oil path (001) through a third one-way valve (90); and the hydraulic push rod (32) communicates with the accumulating oil path through an oil charge solenoid valve (71), the hydraulic push rod (32) achieves oil return and pressure relief through an oil drain solenoid valve (72), and the oil charge solenoid valve (71) and the oil drain solenoid valve (72) are electrically connected to an electric control unit, respectively;
a force sensor (42) configured to detect information on a pulling force borne by a lower pull rod or an upper pull rod; a lifter position sensor (43) configured to detect position information of a lifter; and a valve rod displacement sensor (41) configured to detect displacement information of the valve rod (302) of the hydraulic distributor (30); wherein the force sensor (42), the lifter position sensor (43) and the valve rod displacement sensor (41) are electrically connected to the electric control unit, respectively; wherein
two adjacent valve rod sections of the valve rod (302) are respectively provided with a raising speed control conical surface (302A) and a lowering speed control conical surface (302B);
when the hydraulic distributor (30) is in the neutral working position, the pressure oil chamber (p) communicates with the oil return chamber (t), the first working oil chamber (a) is closed, and the second working oil chamber (b) is closed;
when the hydraulic distributor (30) is in the raising working position, the pressure oil chamber (p) is disconnected from the oil return chamber (t), a raising speed throttling clearance is formed between the valve rod (302) and the valve body (301) at the raising speed control conical surface (302A), the first working oil chamber (a) communicates with the pressure oil chamber (p) through the raising speed throttling clearance, and the second working oil chamber (b) communicates with the oil return chamber (t);
when the hydraulic distributor (30) is in the lowering working position, the pressure oil chamber (p) is disconnected from the oil return chamber (t), a lowering speed throttling clearance is formed between the valve rod (302) and the valve body (301) at the lowering speed control conical surface (302B), the first working oil chamber (a) communicates with the oil return chamber (t) through the lowering speed throttling clearance, and the second working oil chamber (b) communicates with the pressure oil chamber (p); and
the pressure oil chamber (p), the first working oil chamber (a) and the second working oil chamber (b) respectively communicate with the oil return chamber (t) when the hydraulic distributor (30) is in the floating working position.

2. The intelligent control system of the hydraulic hitch device according to claim 1, wherein the hydraulic distributor (30) is provided with a neutral charging working position, and the pressure oil chamber (p) is disconnected from the oil return chamber (t), the first working oil chamber (a) is closed, and the second working oil chamber (b) is closed when the hydraulic distributor (30) is in the neutral charging working position.

3. The intelligent control system of the hydraulic hitch device according to claim 1, wherein the hydraulic distributor (30) is provided with a floating charging working position, and the pressure oil chamber (p) is disconnected from the oil return chamber (t), the first working oil chamber (a) communicates with the oil return chamber (t), and the second working oil chamber (b) communicates with the oil return chamber (t) when the hydraulic distributor (30) is in the floating charging working position.

4. The intelligent control system of the hydraulic hitch device according to claim 1, wherein a first overflow pressure maintaining branch oil path for performing overflow pressure maintaining on the rodless cavity of the lifting oil cylinder (20) and a second overflow pressure maintaining branch oil path for performing overflow pressure maintaining on the rod cavity of the lifting oil cylinder (20) are arranged between the first working oil path and the second working oil path; wherein the first overflow pressure maintaining branch oil path comprises a first overflow pressure maintaining valve (21), and an opening pressure of the first overflow pressure maintaining valve (21) is not less than a pressure of a hitched farm tool to the first working oil port (A) when the hydraulic distributor (30) is in a neutral state; and the second overflow pressure maintaining branch oil path comprises a second overflow pressure maintaining valve (22).

5. The intelligent control system of the hydraulic hitch device according to claim 4, wherein one valve rod section of the valve rod (302) is provided with a throttling step surface (302C); the hydraulic distributor (30) is provided with a jolt reduction working position, the throttling step surface (302C) and a corresponding inner hole of the valve body (301) form a throttling clearance (m) that communicates the second working oil chamber (b) with the oil return chamber (t) when the hydraulic distributor (30) is in the jolt reduction working position, the pressure oil chamber (p) communicates with the oil return chamber (t), and the first working oil chamber (a) is closed.

6. The intelligent control system of the hydraulic hitch device according to claim 1, wherein the first working oil path is provided with a stop valve (10).

7. The intelligent control system of the hydraulic hitch device according to claim 6, wherein the stop valve (10) comprises a valve sleeve, a valve element (105), a return spring (104), and a gland device (103), wherein the valve sleeve comprises a first valve sleeve (101) and a second valve sleeve (102) which are axially arranged and fixedly connected together, and the return spring (104) is located in the second valve sleeve (102) and clamped between the gland device (103) and the valve element (105);
the first valve sleeve (101) is provided with a first cavity (101a), and a first oil port (101A) communicating with the first cavity (101a), and the second valve sleeve (102) is provided with a second cavity (102b), and a second oil port (102B) communicating with the second cavity (102b) ;
the first oil port (101A) communicates with the first working oil port (A) of the hydraulic distributor (30), and the second oil port (102B) communicates with the rodless cavity of the lifting oil cylinder (20); or
the first oil port (101A) communicates with the rodless cavity of the lifting oil cylinder (20), and the second oil port (102B) communicates with the first working oil port (A) of the hydraulic distributor (30);
the valve element (105) comprises a first valve element section (1051) and a second valve element section (1052) which have a same outer diameter (d), wherein an annular groove (1054) is formed between the first valve element section (1051) and the second valve element section (1052), the annular groove (1054) corresponds to the first cavity (101a) in position, the first valve element section (1051) is in sliding fit with the first valve sleeve (101), the second valve element section (1052) is in sliding fit with the second valve sleeve (102), the second valve element section (1052) is provided with a flange (1053) near the annular groove (1054), the flange (1053) is provided with a valve element sealing conical surface (1053A), an end portion of the first valve sleeve (101) is provided with a valve sleeve sealing conical surface (1011), the valve element sealing conical surface (1053A) differs from the valve sleeve sealing conical surface (1011) in taper, and the first cavity (101a) is disconnected from the second cavity (102b) when the valve element sealing conical surface (1053A) abuts against an inner edge of the valve sleeve sealing conical surface (1011) under the action of the return spring (104); and
the valve element (105) is connected to a linear actuator (108) through a connecting device, the linear actuator (108) is electrically connected to the electric control unit, and when the linear actuator is energized, the valve element (105) is driven to move, so that the valve element sealing conical surface (1053A) is disengaged from the valve sleeve sealing conical surface (1011), and then the first cavity (101a) communicates with the second cavity (102b).

8. The intelligent control system of the hydraulic hitch device according to claim 7, wherein an open free end of the first valve sleeve (101) is a hydraulic control port, the hydraulic control port communicates with the main oil path (001), and a preset spring force of the return spring (104) is greater than a thrust force of oil pressure on the valve element (105) when the main oil path (001) is in a pressure relief state but less than a thrust force of oil pressure on the valve element (105) when the main oil path (001) is in a high pressure state.

9. The intelligent control system of the hydraulic hitch device according to claim 7, wherein the connecting device comprises a pull rod (106) and a pull rod sleeve (107), wherein the pull rod (106) extends from the gland device (103) into the second valve sleeve (102), and is fixedly connected to the valve element (105), the pull rod sleeve (107) is slidably connected to the pull rod (106), the pull rod sleeve (107) is connected to a moving shaft of the linear actuator (108), and the linear actuator (108) drives the pull rod sleeve (107) to drive the pull rod (106) to move axially.

10. The intelligent control system of the hydraulic hitch device according to claim 1, wherein the oil charge solenoid valve (71) and the oil drain solenoid valve (72) each are a normally closed two position two-way solenoid valve.

## Patentansprüche

1. Ein intelligentes Steuersystem einer hydraulischen Kupplungsvorrichtung, beinhaltend:
einen Hebeölzylinder (20) und einen Hydraulikverteiler (30), wobei der Hydraulikverteiler (30) einen Ventilkörper (301) und eine in dem Ventilkörper (301) angeordnete Ventilstange (302) beinhaltet, wobei der Ventilkörper (301) mit Folgendem versehen ist: einer ersten Arbeitsölkammer (a), die mit einem ersten Arbeitsölanschluss (A) in Verbindung steht, einer zweiten Arbeitsölkammer (b), die mit einem zweiten Arbeitsölanschluss (B) in Verbindung steht, einer Druckölkammer (p), die mit einem Druckölanschluss (P) in Verbindung steht, und einer Ölrücklaufkammer (t), die mit einem Ölrücklaufanschluss (T) in Verbindung steht, wobei der erste Arbeitsölanschluss (A) über einen ersten Arbeitsölpfad mit einem stangenlosen Hohlraum des Hebeölzylinders (20) in Verbindung steht, der zweite Arbeitsölanschluss (B) über einen zweiten Arbeitsölpfad mit einem Stangenhohlraum des Hebeölzylinders (20) in Verbindung steht, der Druckölanschluss (P) mit einem Hauptölpfad (001) in Verbindung steht und der Ölrücklaufanschluss (T) mit einem Ölbehälter in Verbindung steht; und
wobei der Hydraulikverteiler (30) mit einer neutralen Arbeitsstellung, einer Anhebearbeitsstellung, einer Absenkarbeitsstellung und einer schwebenden Arbeitsstellung versehen ist; und
wobei die Ventilstange (302) mit einer Vielzahl von Ventilstangenabschnitten zum Steuern der Verbindung oder Trennung der entsprechenden Ölkammern versehen ist, ein Ende der Ventilstange (302) mit einem Hydraulikstößel (32) verbunden ist und das andere Ende der Ventilstange (302) mit einer Rückstellfeder (31) verbunden ist;
einen Sammelölpfad, der einen Sammler (80) beinhaltet, wobei der Sammler (80) über ein erstes Einwegeventil (50) mit dem ersten Arbeitsölpfad in Verbindung steht, der Sammler (80) über ein zweites Einwegeventil (60) mit dem zweiten Arbeitsölpfad in Verbindung steht und der Sammler (80) über ein drittes Einwegeventil (90) mit dem Hauptölpfad (001) in Verbindung steht; und wobei der Hydraulikstößel (32) über ein Ölfüllmagnetventil (71) mit dem Sammelölpfad in Verbindung steht, der Hydraulikstößel (32) Ölrücklauf und Druckentlastung über ein Ölablassmagnetventil (72) erreicht und das Ölfüllmagnetventil (71) und das Ölablassmagnetventil (72) jeweils mit einer elektrischen Steuereinheit elektrisch verbunden sind;
einen Kraftsensor (42), der dazu konfiguriert ist, Informationen zu einer von einer unteren Zugstange oder einer oberen Zugstange getragenen Zugkraft zu erfassen;
einen Heberstellungssensor (43), der dazu konfiguriert ist, Stellungsinformationen eines Hebers zu erfassen; und einen Ventilstangenverschiebungssensor (41), der dazu konfiguriert ist, Verschiebungsinformationen der Ventilstange (302) des Hydraulikverteilers (30) zu erfassen; wobei der Kraftsensor (42), der Heberstellungssensor (43) und der Ventilstangenverschiebungssensor (41) jeweils mit der elektrischen Steuereinheit elektrisch verbunden sind; wobei
zwei benachbarte Ventilstangenabschnitte der Ventilstange (302) mit einer konischen Anhebegeschwindigkeits-Steuerfläche (302A) bzw. einer konischen Absenkgeschwindigkeits-Steuerfläche (302B) versehen sind;
wenn sich der Hydraulikverteiler (30) in der neutralen Arbeitsstellung befindet, die Druckölkammer (p) mit der Ölrücklaufkammer (t) in Verbindung steht, die erste Arbeitsölkammer (a) geschlossen ist und die zweite Arbeitsölkammer (b) geschlossen ist;
wenn sich der Hydraulikverteiler (30) in der Anhebearbeitsstellung befindet, die Druckölkammer (p) von der Ölrücklaufkammer (t) getrennt ist, an der konischen Anhebegeschwindigkeits-Steuerfläche (302A) ein Anhebegeschwindigkeits-Drosselabstand zwischen der Ventilstange (302) und dem Ventilkörper (301) gebildet ist, die erste Arbeitsölkammer (a) über den Anhebegeschwindigkeits-Drosselabstand mit der Druckölkammer (p) in Verbindung steht und die zweite Arbeitsölkammer (b) mit der Ölrücklaufkammer (t) in Verbindung steht;
wenn sich der Hydraulikverteiler (30) in der Absenkarbeitsstellung befindet, die Druckölkammer (p) von der Ölrücklaufkammer (t) getrennt ist, an der konischen Absenkgeschwindigkeits-Steuerfläche (302B) ein Absenkgeschwindigkeits-Drosselabstand zwischen der Ventilstange (302) und dem Ventilkörper (301) gebildet ist, die erste Arbeitsölkammer (a) über den Absenkgeschwindigkeits-Drosselabstand mit der Ölrücklaufkammer (t) in Verbindung steht und die zweite Arbeitsölkammer (b) mit der Druckölkammer (p) in Verbindung steht; und
die Druckölkammer (p), die erste Arbeitsölkammer (a) und die zweite Arbeitsölkammer (b) jeweils mit der Ölrücklaufkammer (t) in Verbindung stehen, wenn sich der Hydraulikverteiler (30) in der schwebenden Arbeitsstellung befindet.

2. Intelligentes Steuersystem der hydraulischen Kupplungsvorrichtung gemäß Anspruch 1, wobei der Hydraulikverteiler (30) mit einer neutralen Füllarbeitsstellung versehen ist und die Druckölkammer (p) von der Ölrücklaufkammer (t) getrennt ist, die erste Arbeitsölkammer (a) geschlossen ist und die zweite Arbeitsölkammer (b) geschlossen ist, wenn sich der Hydraulikverteiler (30) in der neutralen Füllarbeitsstellung befindet.

3. Intelligentes Steuersystem der hydraulischen Kupplungsvorrichtung gemäß Anspruch 1, wobei der Hydraulikverteiler (30) mit einer schwebenden Füllarbeitsstellung versehen ist und die Druckölkammer (p) von der Ölrücklaufkammer (t) getrennt ist, die erste Arbeitsölkammer (a) mit der Ölrücklaufkammer (t) in Verbindung steht und die zweite Arbeitsölkammer (b) mit der Ölrücklaufkammer (t) in Verbindung steht, wenn sich der Hydraulikverteiler (30) in der schwebenden Füllarbeitsstellung befindet.

4. Intelligentes Steuersystem der hydraulischen Kupplungsvorrichtung gemäß Anspruch 1, wobei ein erster Überlaufdruckhaltezweigölpfad zum Ausführen von Überlaufdruckhaltung an dem stangenlosen Hohlraum des Hebeölzylinders (20) und ein zweiter Überlaufdruckhaltungszweigölpfad zum Ausführen von Überlaufdruckhaltung an dem Stangenhohlraum des Hebeölzylinders (20) zwischen dem ersten Arbeitsölpfad und dem zweiten Arbeitsölpfad angeordnet sind; wobei der erste Überlaufdruckhaltezweigölpfad ein erstes Überlaufdruckhalteventil (21) beinhaltet und ein Öffnungsdruck des ersten Überlaufdruckhalteventils (21) nicht geringer als ein Druck eines angekoppelten Landwirtschaftswerkzeugs auf den ersten Arbeitsölanschluss (A) ist, wenn sich der Hydraulikverteiler (30) in einem neutralen Zustand befindet; und wobei der zweite Überlaufdruckhaltezweigölpfad ein zweites Überlaufdruckhalteventil (22) beinhaltet.

5. Intelligentes Steuersystem der hydraulischen Kupplungsvorrichtung gemäß Anspruch 4, wobei ein Ventilstangenabschnitt der Ventilstange (302) mit einer gestuften Drosselfläche (302C) versehen ist; der Hydraulikverteiler (30) mit einer stoßreduzierenden Arbeitsstellung versehen ist, die gestufte Drosselfläche (302C) und ein entsprechendes inneres Loch des Ventilkörpers (301) einen Drosselabstand (m) bilden, der die zweite Arbeitsölkammer (b) mit der Ölrücklaufkammer (t) in Verbindung setzt, wenn sich der Hydraulikverteiler (30) in der stoßreduzierenden Arbeitsstellung befindet, die Druckölkammer (p) mit der Ölrücklaufkammer (t) in Verbindung steht und die erste Arbeitsölkammer (a) geschlossen ist.

6. Intelligentes Steuersystem der hydraulischen Kupplungsvorrichtung gemäß Anspruch 1, wobei der erste Arbeitsölpfad mit einem Absperrventil (10) versehen ist.

7. Intelligentes Steuersystem der hydraulischen Kupplungsvorrichtung gemäß Anspruch 6,
wobei das Absperrventil (10) eine Ventilhülse, ein Ventilelement (105), eine Rückstellfeder (104) und eine Stopfbuchsenvorrichtung (103) beinhaltet, wobei die Ventilhülse eine erste Ventilhülse (101) und eine zweite Ventilhülse (102) beinhaltet, die axial angeordnet sind und feststehend miteinander verbunden sind, und wobei sich die Rückstellfeder (104) in der zweiten Ventilhülse (102) befindet und zwischen der Stopfbuchsenvorrichtung (103) und dem Ventilelement (105) geklemmt ist;
wobei die erste Ventilhülse (101) mit einem erste Hohlraum (101a) und einem mit dem ersten Hohlraum (101a) in Verbindung stehenden ersten Ölanschluss (101A) versehen ist und die zweite Ventilhülse (102) mit einem zweiten Hohlraum (102b) und einem mit dem zweiten Hohlraum (102b) in Verbindung stehenden zweiten Ölanschluss (102B) versehen ist;
wobei der erste Ölanschluss (101A) mit dem ersten Arbeitsölanschluss (A) des Hydraulikverteilers (30) in Verbindung steht und der zweite Ölanschluss (102B) mit dem stangenlosen Hohlraum des Hebeölzylinders (20) in Verbindung steht; oder
wobei der erste Ölanschluss (101A) mit dem stangenlosen Hohlraum des Hebeölzylinders (20) in Verbindung steht und der zweite Ölanschluss (102B) mit dem ersten Arbeitsölanschluss (A) des Hydraulikverteilers (30) in Verbindung steht;
wobei das Ventilelement (105) einen ersten Ventilelementabschnitt (1051) und einen zweiten Ventilelementabschnitt (1052) beinhaltet, die einen gleichen Außendurchmesser (d) aufweisen, wobei eine Ringnut (1054) zwischen dem ersten Ventilelementabschnitt (1051) und dem zweiten Ventilelementabschnitt (1052) gebildet ist, die Ringnut (1054) in ihrer Lage dem ersten Hohlraum (101a) entspricht, der erste Ventilelementabschnitt (1051) mit der ersten Ventilhülse (101) gleitend zusammengepasst ist, der zweite Ventilelementabschnitt (1052) mit der zweiten Ventilhülse (102) eine Gleitpassung bildet, der zweite Ventilelementabschnitt (1052) mit einem Flansch (1053) in der Nähe der Ringnut (1054) versehen ist, der Flansch (1053) mit einer konischen Ventilelementdichtfläche (1053A) versehen ist, ein Endteil der ersten Ventilhülse (101) mit einer konischen Ventilhülsendichtfläche (1011) versehen ist, sich die konische Ventilelementdichtfläche (1053A) von der konischen Ventilhülsendichtfläche (1011) in der Konizität unterscheidet und der erste Hohlraum (101a) von dem zweiten Hohlraum (102b) getrennt ist, wenn die konische Ventilelementdichtfläche (1053A) unter der Wirkung der Rückstellfeder (104) an einer inneren Kante der konischen Ventilhülsendichtfläche (1011) anliegt; und
wobei das Ventilelement (105) über eine Verbindungsvorrichtung mit einem Linearaktor (108) verbunden ist, der Linearaktor (108) mit der elektrischen Steuereinheit elektrisch verbunden ist, und, wenn der Linearaktor mit Energie versorgt wird, das Ventilelement (105) zur Bewegung angetrieben wird, sodass die konische Ventilelementdichtfläche (1053A) von der konischen Ventilhülsendichtfläche (1011) gelöst wird und dann der erste Hohlraum (101a) mit dem zweiten Hohlraum (102b) in Verbindung steht.

8. Intelligentes Steuersystem der hydraulischen Kupplungsvorrichtung gemäß Anspruch 7, wobei ein offenes freies Ende der erste Ventilhülse (101) ein Hydrauliksteueranschluss ist, der Hydrauliksteueranschluss mit dem Hauptölpfad (001) in Verbindung steht und eine voreingestellte Federkraft der Rückstellfeder (104) höher als eine Schubkraft von Öldruck auf das Ventilelement (105), wenn sich der Hauptölpfad (001) in einem Druckentlastungszustand befindet, aber geringer als eine Schubkraft von Öldruck auf das Ventilelement (105), wenn sich der Hauptölpfad (001) in einem Hochdruckzustand befindet, ist.

9. Intelligentes Steuersystem der hydraulischen Kupplungsvorrichtung gemäß Anspruch 7, wobei die Verbindungsvorrichtung eine Zugstange (106) und eine Zugstangenhülse (107) umfasst, wobei sich die Zugstange (106) von der Stopfbuchsenvorrichtung (103) in die zweite Ventilhülse (102) erstreckt und mit dem Ventilelement (105) feststehend verbunden ist, wobei die Zugstangenhülse (107) mit der Zugstange (106) gleitfähig verbunden ist, die Zugstangehülse (107) mit einer beweglichen Welle des Linearaktors (108) verbunden ist und der Linearaktor (108) die Zugstangenhülse (107) antreibt, um die Zugstange (106) zu axialer Bewegung anzutreiben.

10. Intelligentes Steuersystem der hydraulischen Kupplungsvorrichtung gemäß Anspruch 1, wobei das Ölfüllmagnetventil (71) und das Ölablassmagnetventil (72) jeweils ein stromlos geschlossenes Zweistellungs-Zweiwege-Magnetventil sind.

## Revendications

1. Un système de commande intelligent d'un dispositif d'attelage hydraulique, comprenant :
un vérin d'huile de levage (20) et un distributeur hydraulique (30), où le distributeur hydraulique (30) comprend un corps de soupape (301) et une tige de soupape (302) agencée dans le corps de soupape (301), où le corps de soupape (301) est doté d'une première chambre d'huile de travail (a) communiquant avec un premier orifice d'huile de travail (A), d'une deuxième chambre d'huile de travail (b) communiquant avec un deuxième orifice d'huile de travail (B), d'une chambre d'huile de pression (p) communiquant avec un orifice d'huile de pression (P), et d'une chambre de retour d'huile (t) communiquant avec un orifice de retour d'huile (T), où le premier orifice d'huile de travail (A) communique avec une cavité sans tige du vérin d'huile de levage (20) par l'intermédiaire d'un premier chemin d'huile de travail, le deuxième orifice d'huile de travail (B) communique avec une cavité à tige du vérin d'huile de levage (20) par l'intermédiaire d'un deuxième chemin d'huile de travail, l'orifice d'huile de pression (P) communique avec un chemin d'huile principal (001), et l'orifice de retour d'huile (T) communique avec un réservoir d'huile ; et le distributeur hydraulique (30) est doté d'une position de travail neutre, d'une position de travail d'élévation, d'une position de travail d'abaissement et d'une position de travail flottante ; et
la tige de soupape (302) est dotée d'une pluralité de sections de tige de soupape pour la commande de la communication ou du désaccouplement des chambres d'huile correspondantes, une extrémité de la tige de soupape (302) est raccordée à une tige de poussée hydraulique (32), et l'autre extrémité de la tige de soupape (302) est dotée d'un ressort de rappel (31) ;
un chemin d'huile d'accumulation, comprenant un accumulateur (80), où l'accumulateur (80) communique avec le premier chemin d'huile de travail par l'intermédiaire d'une première soupape de non-retour (50), l'accumulateur (80) communique avec le deuxième chemin d'huile de travail par l'intermédiaire d'une deuxième soupape de non-retour (60), et l'accumulateur (80) communique avec le chemin d'huile principal (001) par l'intermédiaire d'une troisième soupape de non-retour (90) ; et la tige de poussée hydraulique (32) communique avec le chemin d'huile d'accumulation par l'intermédiaire d'une soupape électromagnétique de remplissage d'huile (71), la tige de poussée hydraulique (32) réalise un retour et une décharge de pression d'huile par l'intermédiaire d'une soupape électromagnétique de purge d'huile (72), et la soupape électromagnétique de remplissage d'huile (71) et la soupape électromagnétique de purge d'huile (72) sont électriquement connectées à une unité de commande électrique, respectivement ;
un capteur de force (42) configuré pour détecter des informations concernant une force de traction supportée par une tige de traction inférieure ou une tige de traction supérieure ; un capteur de position de dispositif de levage (43) configuré pour détecter des informations de position d'un dispositif de levage ; et un capteur de déplacement de tige de soupape (41) configuré pour détecter des informations de déplacement de la tige de soupape (302) du distributeur hydraulique (30) ; où le capteur de force (42), le capteur de position de dispositif de levage (43) et le capteur de déplacement de tige de soupape (41) sont électriquement connectés à l'unité de commande électrique, respectivement ; où
deux sections de tige de soupape adjacentes de la tige de soupape (302) sont respectivement dotées d'une surface conique de commande de vitesse d'élévation (302A) et d'une surface conique de commande de vitesse d'abaissement (302B) ;
lorsque le distributeur hydraulique (30) est dans la position de travail neutre, la chambre d'huile de pression (p) communique avec la chambre de retour d'huile (t), la première chambre d'huile de travail (a) est fermée, et la deuxième chambre d'huile de travail (b) est fermée ;
lorsque le distributeur hydraulique (30) est dans la position de travail d'élévation, la chambre d'huile de pression (p) est désaccouplée de la chambre de retour d'huile (t), un espace libre d'étranglement de vitesse d'élévation est formé entre la tige de soupape (302) et le corps de soupape (301) au niveau de la surface conique de commande de vitesse d'élévation (302A), la première chambre d'huile de travail (a) communique avec la chambre d'huile de pression (p) par l'intermédiaire de l'espace libre d'étranglement de vitesse d'élévation, et la deuxième chambre d'huile de travail (b) communique avec la chambre de retour d'huile (t) ;
lorsque le distributeur hydraulique (30) est dans la position de travail d'abaissement, la chambre d'huile de pression (p) est désaccouplée de la chambre de retour d'huile (t), un espace libre d'étranglement de vitesse d'abaissement est formé entre la tige de soupape (302) et le corps de soupape (301) au niveau de la surface conique de commande de vitesse d'abaissement (302B), la première chambre d'huile de travail (a) communique avec la chambre de retour d'huile (t) par l'intermédiaire de l'espace libre d'étranglement de vitesse d'abaissement, et la deuxième chambre d'huile de travail (b) communique avec la chambre d'huile de pression (p) ; et
la chambre d'huile de pression (p), la première chambre d'huile de travail (a) et la deuxième chambre d'huile de travail (b) communiquent respectivement avec la chambre de retour d'huile (t) lorsque le distributeur hydraulique (30) est dans la position de travail flottante.

2. Le système de commande intelligent du dispositif d'attelage hydraulique selon la revendication 1, où le distributeur hydraulique (30) est doté d'une position de travail de charge neutre, et la chambre d'huile de pression (p) est désaccouplée de la chambre de retour d'huile (t), la première chambre d'huile de travail (a) est fermée, et la deuxième chambre d'huile de travail (b) est fermée lorsque le distributeur hydraulique (30) est dans la position de travail de charge neutre.

3. Le système de commande intelligent du dispositif d'attelage hydraulique selon la revendication 1, où le distributeur hydraulique (30) est doté d'une position de travail de charge flottante, et la chambre d'huile de pression (p) est désaccouplée de la chambre de retour d'huile (t), la première chambre d'huile de travail (a) communique avec la chambre de retour d'huile (t), et la deuxième chambre d'huile de travail (b) communique avec la chambre de retour d'huile (t) lorsque le distributeur hydraulique (30) est dans la position de travail de charge flottante.

4. Le système de commande intelligent du dispositif d'attelage hydraulique selon la revendication 1, où un premier chemin d'huile secondaire de maintien de pression de trop-plein destiné à effectuer un maintien de pression de trop-plein sur la cavité sans tige du vérin d'huile de levage (20) et un deuxième chemin d'huile secondaire de maintien de pression de trop-plein destiné à effectuer un maintien de pression de trop-plein sur la cavité à tige du vérin d'huile de levage (20) sont agencés entre le premier chemin d'huile de travail et le deuxième chemin d'huile de travail ; où le premier chemin d'huile secondaire de maintien de pression de trop-plein comprend une première soupape de maintien de pression de trop-plein (21), et une pression d'ouverture de la première soupape de maintien de pression de trop-plein (21) n'est pas inférieure à une pression d'un outil agricole attelé au premier orifice d'huile de travail (A) lorsque le distributeur hydraulique (30) est dans un état neutre ; et le deuxième chemin d'huile secondaire de maintien de pression de trop-plein comprend une deuxième soupape de maintien de pression de trop-plein (22).

5. Le système de commande intelligent du dispositif d'attelage hydraulique selon la revendication 4, où une section de tige de soupape de la tige de soupape (302) est dotée d'une surface étagée d'étranglement (302C) ; le distributeur hydraulique (30) est doté d'une position de travail de réduction de secousses, la surface étagée d'étranglement (302C) et un trou interne correspondant du corps de soupape (301) forment un espace libre d'étranglement (m) qui met la deuxième chambre d'huile de travail (b) en communication avec la chambre de retour d'huile (t) lorsque le distributeur hydraulique (30) est dans la position de travail de réduction de secousses, la chambre d'huile de pression (p) communique avec la chambre de retour d'huile (t), et la première chambre d'huile de travail (a) est fermée.

6. Le système de commande intelligent du dispositif d'attelage hydraulique selon la revendication 1, où le premier chemin d'huile de travail est doté d'une soupape d'arrêt (10).

7. Le système de commande intelligent du dispositif d'attelage hydraulique selon la revendication 6, où la soupape d'arrêt (10) comprend un manchon de soupape, un élément formant soupape (105), un ressort de rappel (104), et un dispositif fouloir (103), où le manchon de soupape comprend un premier manchon de soupape (101) et un deuxième manchon de soupape (102) qui sont agencés axialement et raccordés ensemble de manière fixe, et le ressort de rappel (104) est positionné dans le deuxième manchon de soupape (102) et serré entre le dispositif fouloir (103) et l'élément formant soupape (105) ;
le premier manchon de soupape (101) est doté d'une première cavité (101a), et d'un premier orifice d'huile (101A) communiquant avec la première cavité (101a), et le deuxième manchon de soupape (102) est doté d'une deuxième cavité (102b), et d'un deuxième orifice d'huile (102B) communiquant avec la deuxième cavité (102b) ;
le premier orifice d'huile (101A) communique avec le premier orifice d'huile de travail (A) du distributeur hydraulique (30), et le deuxième orifice d'huile (102B) communique avec la cavité sans tige du vérin d'huile de levage (20) ; ou
le premier orifice d'huile (101A) communique avec la cavité sans tige du vérin d'huile de levage (20), et le deuxième orifice d'huile (102B) communique avec le premier orifice d'huile de travail (A) du distributeur hydraulique (30) ;
l'élément formant soupape (105) comprend une première section d'élément formant soupape (1051) et une deuxième section d'élément formant soupape (1052) qui présentent un même diamètre externe (d), où une rainure annulaire (1054) est formée entre la première section d'élément formant soupape (1051) et la deuxième section d'élément formant soupape (1052), la rainure annulaire (1054) correspond à la première cavité (101a) en position, la première section d'élément formant soupape (1051) est en ajustement glissant avec le premier manchon de soupape (101), la deuxième section d'élément formant soupape (1052) est en ajustement glissant avec le deuxième manchon de soupape (102), la deuxième section d'élément formant soupape (1052) est dotée d'une bride (1053) près de la rainure annulaire (1054), la bride (1053) est dotée d'une surface conique d'étanchéité d'élément formant soupape (1053A), une portion d'extrémité du premier manchon de soupape (101) est dotée d'une surface conique d'étanchéité de manchon de soupape (1011), la conicité de la surface conique d'étanchéité d'élément formant soupape (1053A) diffère de celle de la surface conique d'étanchéité de manchon de soupape (1011), et la première cavité (101a) est désaccouplée de la deuxième cavité (102b) lorsque la surface conique d'étanchéité d'élément formant soupape (1053A) vient buter contre un bord interne de la surface conique d'étanchéité de manchon de soupape (1011) sous l'action du ressort de rappel (104) ; et
l'élément formant soupape (105) est raccordé à un actionneur linéaire (108) par l'intermédiaire d'un dispositif de raccordement, l'actionneur linéaire (108) est électriquement connecté à l'unité de commande électrique, et lorsque l'actionneur linéaire est mis sous tension, l'élément formant soupape (105) est entraîné afin de se mouvoir, de sorte que la surface conique d'étanchéité d'élément formant soupape (1053A) se désengage de la surface conique d'étanchéité de manchon de soupape (1011), et ensuite la première cavité (101a) communique avec la deuxième cavité (102b).

8. Le système de commande intelligent du dispositif d'attelage hydraulique selon la revendication 7, où une extrémité libre ouverte du premier manchon de soupape (101) est un orifice de commande hydraulique, l'orifice de commande hydraulique communique avec le chemin d'huile principal (001), et une force de ressort préétablie du ressort de rappel (104) est supérieure à une force de poussée de pression d'huile sur l'élément formant soupape (105) lorsque le chemin d'huile principal (001) est dans un état de décharge de pression mais inférieure à une force de poussée de pression d'huile sur l'élément formant soupape (105) lorsque le chemin d'huile principal (001) est dans un état de haute pression.

9. Le système de commande intelligent du dispositif d'attelage hydraulique selon la revendication 7, où le dispositif de raccordement comprend une tige de traction (106) et un manchon de tige de traction (107), où la tige de traction (106) s'étend depuis le dispositif fouloir (103) jusque dans le deuxième manchon de soupape (102), et est raccordée de manière fixe à l'élément formant soupape (105), le manchon de tige de traction (107) est raccordé de manière glissante à la tige de traction (106), le manchon de tige de traction (107) est raccordé à un arbre mobile de l'actionneur linéaire (108), et l'actionneur linéaire (108) entraîne le manchon de tige de traction (107) afin d'entraîner la tige de traction (106) pour qu'elle se meuve axialement.

10. Le système de commande intelligent du dispositif d'attelage hydraulique selon la revendication 1, où la soupape électromagnétique de remplissage d'huile (71) et la soupape électromagnétique de purge d'huile (72) sont chacune une soupape électromagnétique à deux voies bistable normalement fermée.
